# EUROPÄISCHE PATENTANMELDUNG

(11) **EP 2 476 506 A1**
(43) Veröffentlichungstag der Anmeldung: **18.07.2012**
(21) Anmeldenummer: 11150953.5
(22) Anmeldetag: 14.01.2011
(51) Int. Cl.: B23K 35/30

(54) **Kobaltbasierte Legierung mit Germanium und Verfahren zum Löten**

(71) Anmelder: SIEMENS AKTIENGESELLSCHAFT, 80333 München (DE)
(72) Erfinder: Die Erfindernennung liegt noch nicht vor

(57) **Zusammenfassung**

Kobaltbasierte Legierungen mit Germanium weisen einen höheren Schmelzpunkt auf als nickelbasierte Legierungen, so dass sie vorteilhafterweise für die Reparatur oder Bearbeitung von Bauteil im Hochtemperatureinsatz verwendet werden.

## Beschreibung

Lotlegierungen werden beim Verbinden und Reparieren von Bauteilen verwendet.

Bei Bauteilen für Turbinen, wie z. B. Gasturbinen für die Stromerzeugung oder für Flugzeuge sowie andere Turbinen werden oft nickelbasierte Superlegierungen eingesetzt. Dementsprechend werden nickelbasierte Lote entwickelt, um diese Werkstoffe zu reparieren. Ebenso bekannt sind germaniumhaltige Nickelbasislegierungen.

Oft werden jedoch nicht die gewünschten hohen Löttemperaturen erreicht, die es ermöglichen, Bauteile im Hochtemperatureinsatz wiederum bei hohen Temperaturen einzusetzen, weil ansonsten durch die geringe Festigkeit im Bereich des Lots das Bauteil gefährdet ist.

Es ist daher Aufgabe der Erfindung eine Lotlegierung aufzuzeigen, die oben genanntes Problem löst.

Die Aufgabe wird gelöst durch eine Lotlegierung gemäß Anspruch 1 und ein Verfahren gemäß Anspruch 13.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine Turbinenschaufel,
- Figur 2: eine Turbine,
- Figur 3: eine Liste von Superlegierungen.

Die Beschreibung stellt nur Ausführungsbeispiele der Erfindung dar.

Erfindungsgemäß wird eine kobaltbasierte Legierung mit Germanium aufgezeigt.

Der Germaniumanteil beträgt zwischen 13 Gew.-% und 27 Gew.-%, insbesondere zwischen 14 Gew.-% und 26 Gew.-%.

Die Basis bildet dabei Kobalt mit Anteilen von 40 Gew.-% bis 47 Gew.-%.

Weiterhin weist die kobaltbasierte Legierung auf:
7,0 Gew.-% bis 9,0 Gew.-% Nickel (Ni),
17,0 Gew.-% bis 21, 0 Gew.-% Chrom (Cr),
5,0 Gew.-% bis 6,5 Gew.-% Wolfram (W),
2,0 Gew.-% bis 4, 0 Gew.-% Tantal (Ta),
0,1 Gew.-% bis 0,3 Gew.-% Titan (Ti),
13,0 Gew.-% bis 27, 0 Gew.-% Germanium (Ge) und optional 0,3 Gew.-% bis 0,7 Gew.-% Zirkon (Zr),
optional 0,3 Gew.-% bis 0,7 Gew.-% Kohlenstoff (C).

Vorzugsweise ist die Auflistung der Legierungselemente abschließend, jedoch können weitere Elemente (Gallium (Ga) und/oder Silizium (Si)) zur Festigkeitssteigerung, Phasenbeeinflussung oder Schmelzpunktbeeinflussung vorhanden sein.

Wirkungen der Elemente:
Chrom (Cr)
   - höhere Korrosionsbeständigkeit durch Chrom, die Beständigkeit dürfte besonders im Vergleich zu borhaltigen Loten deutlich höher liegen, da kein Chrom in Boriden gebunden wird und somit effektiv zur Passivierung zur Verfügung steht
   - der Cr-Gehalt ist den Grundwerkstoffen angepasst, was sich positiv auf die Homogenität des Lotverbundes auswirken dürfte.

Titan (Ti) :
- zum Einen senkt es den Schmelzpunkt der Lotlegierung, ist also somit sekundärer Schmelzpunktsenker neben Germanium/Gallium/Silizium
- zum Anderen passt man mit den genannten Ti-gehalten das Lot wieder an den Grundwerkstoff an
- außerdem ist Titan Karbidbildner und härtet somit den Grundwerkstoff und auch die Lotlegierung aus
- außerdem wird die Zugabe von Titan bei den meisten Lotlegierungen nicht in Betracht gezogen, da Titan recht aktiv ist und es u.U. zu einer Passivierung der Lotpartikel durch Oxidation kommen kann.

Germanium (Ge):
Der Ge-Gehalt führt bei den Lötungen zu drastisch reduzierten Anteilen an niedrigschmelzenden Eutektika. Des Weiteren hat sich gezeigt, dass Germanium als schmelzpunktsenkendes Element nicht zu Unverträglichkeiten zwischen gelöteten Bereichen und metallischen Haftvermittlerschichten, insbesondere mit MCrAlY, führt.

Germanium kann durch ähnliche Elemente, insbesondere wie Gallium (Ga) und/oder Silizium (Si) ersetzt werden.

Silizium weist dann vorzugsweise einen Anteil von mindestens 0.3wt% und/oder Gallium einen Anteil von mindesten 1.0wt% auf.

Als besonders Vorteilhaft erweisen sich Kobalt-Basislegierungen, da der primäre Schmelzpunktsenker (Ge) hier eine hohe Löslichkeit aufweist, was die Diffusionszeiten bei der Wärmebehandlung in Grenzen hält.

Vorteilhafterweise lassen sich Co-Basislegierungen, wie X 40, X 45 FSX-41, MAR-M 509, ELY 768 mit dem beschriebenen Lot fügen oder beloten.

Vorteilhafterweise haben Co-Basislegierungen eine hohe Löttemperatur, so dass sich eine deutliche Reduzierung des Anteils des primären Schmelzpunktsenkers, welches die Bildung von niedrigschmelzenden Eutektika im Lötspalt stark verringert. Vorteilhaft ist außerdem die Ähnlichkeit der Lotlegierung mit dem Grundwerkstoff, so dass eine Zugabe an grundwerkstoffähnlichem Additivpulver nicht mehr notwendig und weiterhin dass eine Entmischung von Pulvermischungen von Lot und Additiv, wie sie gängigerweise besonders beim Engspaltlöten auftritt, nicht mehr stattfindet, so dass sich eine homogene Konzentration der Elemente in der Fügung, die den mechanischen Eigenschaften zu Gute kommt, ergibt.

Germanium (Ge) kann teilweise oder vollständig durch Gallium (Ga) und/oder Silizium (Si) ersetzt werden, also sind folgende Mischungen in der Legierung möglich:
Co-Ni-Cr-W-Ta-Ti + Ge
Co-Ni-Cr-W-Ta-Ti + Ge + Si
Co-Ni-Cr-W-Ta-Ti + Ge + Ga
Co-Ni-Cr-W-Ta-Ti + Ge + Ga + Si
Co-Ni-Cr-W-Ta-Ti + Ga + Si
Co-Ni-Cr-W-Ta-Ti + Ga,
und die optionalen Bestandteile Kohlenstoff (C) und/oder Zirkon (Zr).

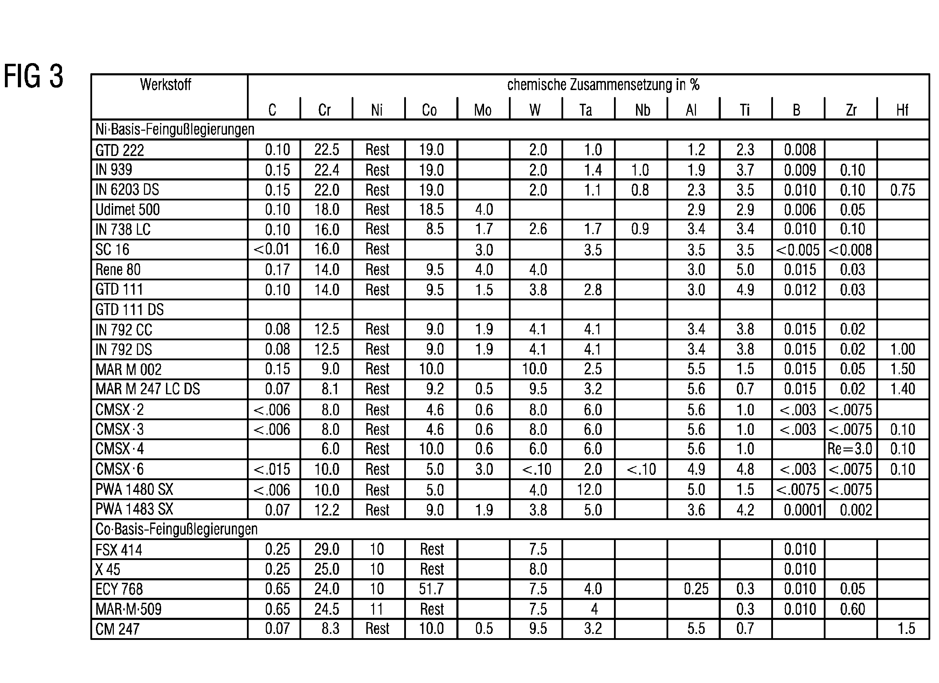

Vorzugsweise werden dann mit dieser kobaltbasierten Legierung als Lot nickelbasierte Substrat, insbesondere gemäß Figur 3 gelötet oder verarbeitet.

Dabei werden vorzugsweise Temperaturen von 1130°C bis 1270°C verwendet.

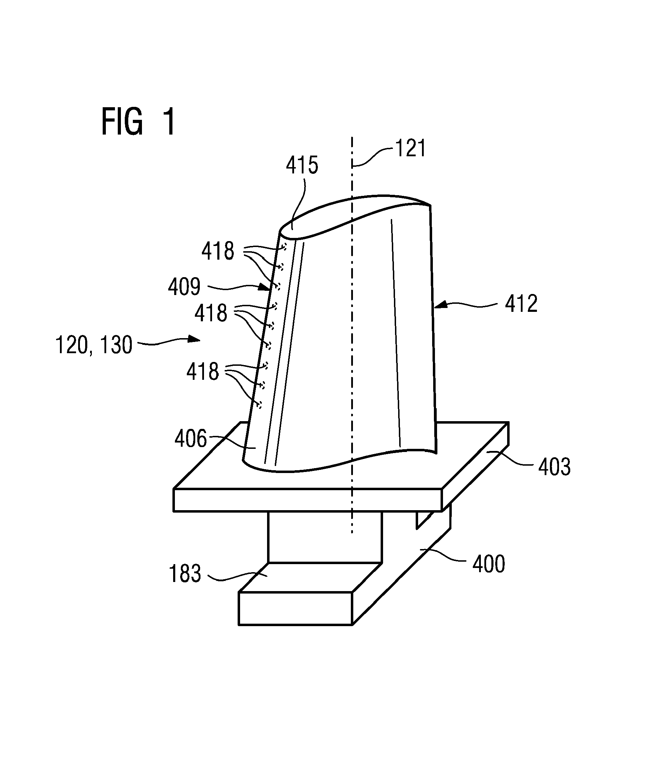

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

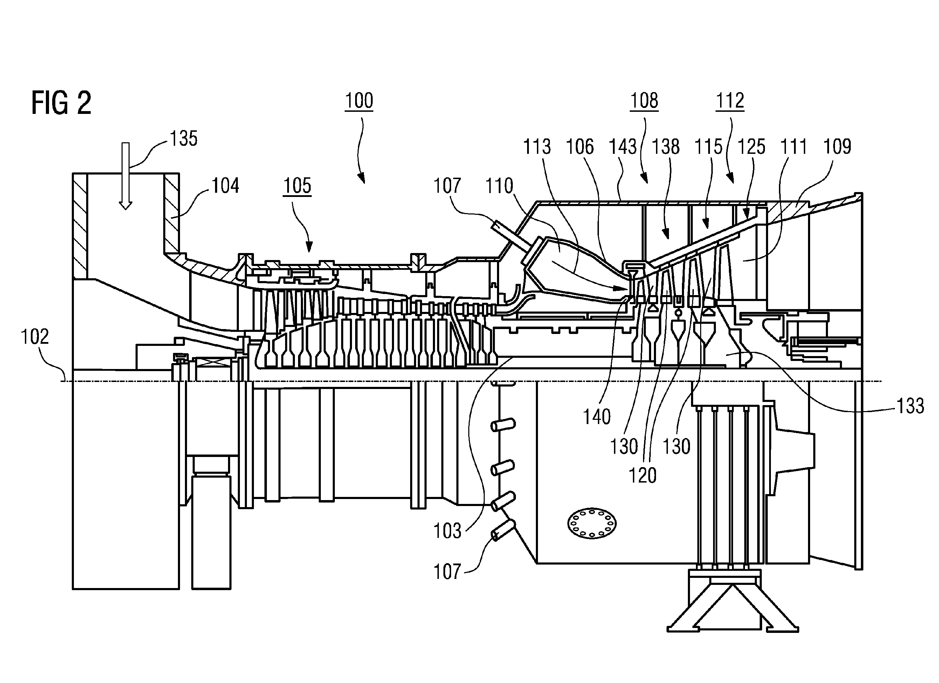

Die Figur 2 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Kobaltbasierte Legierung aufweisend (in Gew.-%):
7,0% bis 9,0% Nickel (Ni),
insbesondere 7,5% bis 8,5% Ni,
17% bis 21% Chrom (Cr),
insbesondere 18,0% bis 20,5% Cr,
5,0% bis 6,5% Wolfram (W),
insbesondere 5,1% bis 6,1% W,
2,0% bis 4,0% Tantal (Ta),
insbesondere 2,5% bis 3,2% Ta,
0,1% bis 0,3% Titan (Ti),
insbesondere 0,2% Ti
13% bis 27% Germanium (Ge),
insbesondere 14% bis 26% Ge,
ganz insbesondere 18% bis 22%,
optional 0,3% bis 0,7% Kohlenstoff (C),
insbesondere 0,4% bis 0,6% C,
optional 0,2% bis 0,7% Zirkon (Zr),
insbesondere 0,3% bis 0,6% Zr.

2. Lotlegierung nach Anspruch 1,
die Zirkon (Zr) aufweist.

3. Lotlegierung nach Anspruch 1 oder 2,
die Kohlenstoff (C) aufweist.

4. Lotlegierung nach einem oder mehreren der Ansprüche 1, 2 oder 3,
bei der Germanium (Ge) teilweise oder vollständig durch Gallium (Ga) ersetzt ist,
insbesondere höchstens teilweise durch Gallium (Ga) ersetzt ist.

5. Lotlegierung nach einem oder mehreren der vorhergehenden Ansprüche 1, 2, 3 oder 4,
bei der Germanium (Ge) höchstens teilweise durch Silizium (Si) ersetzt ist,
insbesondere höchstens zu 90%.

6. Lotlegierung nach einem oder mehreren der vorherigen Ansprüche 1 bis 5,
bei der Kobalt (Co) den Rest darstellt,
so dass keine weiteren Legierungselemente vorhanden sind.

7. Lotlegierung nach einem oder mehreren der Ansprüche 1, 2, 3, 4, 5 oder 6,
die bis auf Verunreinigungen kein Molybdän (Mo) aufweist.

8. Lotlegierung nach einem oder mehreren der Ansprüche 1 bis 7,
die bis auf Verunreinigungen kein Mangan (Mn) und/oder kein Eisen (Fe) enthält.

9. Lotlegierung nach einem oder mehreren der Ansprüche 1 bis 8,
die bis auf Verunreinigungen kein Kohlenstoff (C) und/oder kein Zirkon (Zr) enthält.

10. Lotlegierung nach einem oder mehreren der Ansprüche 1 bis 9,
die keine Mischung zweier oder mehr Legierungen darstellt, insbesondere keine Zumischung einer Basislegierung mit höherem Schmelzpunkt aufweist.

11. Lotlegierung nach einem oder mehreren der Ansprüche 1 bis 10,
die Silizium (Si) enthält.

12. Lotlegierung nach einem oder mehreren der Ansprüche 1 bis 11,
die mindesten 0,3wt% Silizium (Si) und/oder 1,0wt% Gallium (Ga) enthält.

13. Verfahren zur Reparatur eines Substrats,
insbesondere eines nickelbasierten Substrats durch Löten, bei dem eine kobaltbasierte Lotlegierung verwendet wird, insbesondere nach einem oder mehreren der Ansprüche 1 bis 12.

14. Verfahren nach Anspruch 13,
bei dem die Lötung zwischen 1130°C und 1270°C durchgeführt wird.

15. Verfahren nach Anspruch 13 oder 14,
bei dem die Lotlegierung nach einem oder mehreren der Ansprüche 1 bis 12 ohne weitere Zumischung verwendet wird.
